# FASCICULE DE BREVET EUROPEEN

(11) **EP 4 564 539 B1**
(45) Date de publication et mention de la délivrance du brevet: **04.11.2026**
(21) Numéro de dépôt: 23307088.7
(22) Date de dépôt: 29.11.2023
(51) Int. Cl.: H01M 50/103, H01M 50/119, H01M 50/209, H01M 50/244, H01M 50/264

(54) **DISPOSITIF DE FIXATION POUR CELLULES ELECTROCHIMIQUES**
BEFESTIGUNGSVORRICHTUNG FÜR ELEKTROCHEMISCHE ZELLEN
FIXING DEVICE FOR ELECTROCHEMICAL CELLS

(43) Date de publication de la demande: 04.06.2025
(73) Titulaire: Automotive Cells Company SE, 33520 Bruges (FR)
(72) Inventeur: MATHIEU, Alexandre, 33300 Bordeaux (FR); BAYLAC, Johan, 33800 Bordeaux (FR); HERON, Wilfried, 33710 Mombrier (FR); BRIEN, Patrick, 33290 Parempyre (FR)
(74) Mandataire: Alatis

(56) Documents cités:
- JP-A- 2014 110 140
- US-A1- 2014 302 381

## Description

### DOMAINE TECHNIQUE DE L'INVENTION

L'invention concerne, de façon générale, le domaine technique des dispositifs de stockage d'énergie, et en particulier la fixation des cellules électrochimiques de grandes dimensions dans un module de batterie.

Les cellules électrochimiques sont utilisées dans des véhicules électriques ou hybrides, c'est-à-dire mus au moins partiellement par de l'énergie électrique, par exemple. Les documents JP2014110140A et US2014302381A1 concernent des cellules électrochimiques.

### ÉTAT DE LA TECHNIQUE ANTÉRIEURE

Les véhicules automobiles à traction ou propulsion électrique ou hybride, comportent un ou plusieurs modules de batterie reliés à un réseau de puissance pour alimenter un moteur électrique (de traction ou de propulsion).

Les modules de batterie sont regroupés dans un carter et forment alors un bloc batterie aussi souvent désigné par l'expression anglaise « battery pack », ce carter contenant généralement une interface de montage et des bornes de raccordement.

Chaque module de batterie comprend au moins une cellule électrochimique générant du courant par réaction chimique, par exemple de type lithium-ion (ou Liion), de type Ni-Mh, ou Ni-Cd ou plomb.

Une cellule électrochimique comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Chaque cellule électrochimique est logée dans un boîtier métallique. Le boîtier est généralement en aluminium. Une fois l'ensemble de cellules électrochimiques intégrées dans le boîtier, une plaque formant couvercle est soudée au boîtier par laser pour réaliser la connexion structurelle et l'étanchéité de la cellule électrochimique.

Il est connu d'assembler, en série et/ou en parallèle, une pluralité de cellules électrochimiques de grande dimension entres elles afin de réaliser les modules de batterie. Les cellules électrochimiques de grande dimension présentent une longueur supérieure à 100 mm. Les cellules électrochimiques sont collées ou vissées entres elles.

Cependant, une batterie peut comprendre entre 90 et 200 cellules électrochimiques, ce qui entraîne beaucoup d'opérations de vissage et donc un assemblage long, fastidieux et couteux.

De même pour la solution du collage, elle entraîne un assemblage long, fastidieux et couteux et il est de plus difficile de démonter les cellules électrochimiques.

### EXPOSE DE L'INVENTION

L'invention vise à remédier à tout ou partie des inconvénients de l'état de la technique en proposant notamment une solution de fixation pour cellules électrochimiques de grande dimension facilitant l'assemblage d'un grand nombre de cellules électrochimiques et réduisant le temps d'assemblage.

Pour ce faire est proposé, selon un premier aspect de l'invention, une cellule électrochimique comprenant une borne positive, une borne négative, deux parois longitudinales opposées et deux parois transversales opposées et perpendiculaires aux parois longitudinales. Les parois transversales présentent une largeur plus petite que les parois longitudinales.

La cellule électrochimique comprend au moins une patte de maintien fixée sur l'une des parois transversales de la cellule électrochimique et faisant saillie sur la paroi transversale. La paroi transversale et la patte de maintien délimitent un espace destiné à recevoir un rail de fixation en appui contre la patte de maintien dans une position d'assemblage et lorsque le rail de fixation est fixé sur un bâti d'un module de batterie.

L'invention fournit ainsi une solution de fixation pour cellules électrochimiques de grande dimension facilitant l'assemblage d'un grand nombre de cellules électrochimiques et réduisant le temps d'assemblage.

En variante, la patte de maintien est déformable élastiquement.

Cette caractéristique permet de faciliter l'assemblage des rails de fixation en leur laissant un degré de liberté pour leur positionnement entre un bâti et la cellule électrochimique.

En variante, la patte de maintien est fixée à une partie inférieure de la paroi transversale. En d'autres termes, la patte de maintien est fixée à la paroi transversale sur une moitié inférieure de la hauteur de la paroi, laquelle correspond en substance à la hauteur de la cellule électrochimique.

Cette configuration permet de laisser libre la partie supérieure pour relier les bornes de différentes cellules électrochimiques entres elles.

En variante, la patte de maintien s'étend depuis la paroi transversale vers l'extérieur de la paroi transversale. L'espace est ouvert vers le haut, du côté d'une paroi supérieure de la cellule électrochimique.

Cette solution permet d'insérer le rail de fixation par le haut de la cellule électrochimique, facilitant l'assemblage.

En variante, la patte de maintien comprend une première portion fixée à la paroi transversale et une deuxième portion inclinée par rapport à la première portion en s'étendant vers l'extérieur de la paroi transversale. La patte de maintien comprend de préférence une troisième portion inclinée par rapport à la deuxième portion.

Cette solution fournit une patte de maintien de forme simple et efficace pour bloquer le rail de fixation contre la patte de maintien. Les première et deuxième portions assurent une meilleure contrainte élastique selon une direction verticale (ou axiale), tandis que l'élasticité de la troisième portion assure une meilleure contrainte élastique suivant la direction transversale.

En variante, la patte de maintien est en matériau(x) métallique(s).

En variante, les deuxième et troisième portions de la patte de maintien comprennent une surface interne recouverte au moins en partie, de préférence intégralement par un isolant électrique.

Cette solution permet d'isoler la patte de maintien du rail de fixation.

En variante, la cellule électrochimique comprend deux pattes de maintien, chacune fixée sur l'une des deux parois transversales distinctes.

Les pattes de maintien disposées de chaque côté des cellules électrochimiques permettent de fixer les cellules électrochimiques au moyen de deux rails distincts et d'assurer une fixation optimale des cellules électrochimiques dans le module de batterie.

L'invention concerne également un module de batterie comprenant au moins une cellule électrochimique telle que définie précédemment. La cellule électrochimique comprend au moins une patte de maintien fixée sur l'une des parois transversales et faisant saillie sur la paroi transversale. Un rail de fixation est inséré entre la paroi transversale et la patte de maintien pour venir en appui contre la patte de maintien lorsque le rail de fixation est fixé sur un bâti d'un module de batterie.

En variante, le rail de fixation comprend une première partie en appui contre la deuxième portion de la patte de maintien, une deuxième partie inclinée par rapport à la première partie et en appui contre la troisième portion de la patte de maintien et une troisième partie inclinée par rapport à la deuxième partie et fixé à une face supérieure du bâti.

En variante, le rail de fixation est recouvert, au moins en partie, par une couche de matériau isolant électriquement.

Les rails de fixation et les pattes de maintien fournissent ainsi un dispositif de fixation permettant de faciliter et réduire le temps d'assemblage d'une multitude de grandes cellules électrochimiques à la fois.

En variante, lorsque la cellule électrochimique est en position assemblée dans le module de batterie et verrouillée par le rail de fixation, la cellule électrochimique est enserrée axialement entre le rail de fixation et un socle inférieur du module de batterie.

L'invention concerne également un procédé d'assemblage d'un module de batterie tel que défini précédemment. Le procédé d'assemblage comprend :
- une étape de positionnement de plusieurs cellules électrochimiques dans un boîtier de module de batterie, chaque cellule électrochimique comprenant au moins une patte de maintien fixée sur l'une des parois transversales et positionnée de manière que les pattes de maintien de plusieurs cellules électrochimiques soient alignées les unes aux autres,
- une étape d'insertion d'un rail de fixation entre les pattes de maintien et les parois transversales des cellules électrochimiques, et
- une étape de fixation du rail de fixation sur un bâti du module de batterie, le rail de fixation venant en appui contre la patte de maintien.

Toutes les cellules électrochimiques peuvent être assemblées en même temps en positionnant deux rails de fixation de chaque côté des cellules électrochimiques et en les fixant aux bâtis. Le temps d'assemblage est donc très réduit, réduisant les coûts de fabrication.

Il est également très facile et rapide de démonter toutes les cellules électrochimiques toutes en même temps en dévissant les rails de fixation des bâtis et en dégageant les rails de fixation des espaces entre les pattes de maintien et les parois transversales des cellules électrochimiques.

### BRÈVE DESCRIPTION DES FIGURES

D'autres caractéristiques et avantages de l'invention ressortiront à la lecture de la description qui suit, en référence aux figures annexées, qui illustrent :
- figure 1 : une vue schématique d'une cellule électrochimique, selon un mode de réalisation de l'invention ;
- figure 2 : une vue schématique d'un ensemble de cellules électrochimiques lors du positionnement d'un rail de fixation sur les cellules électrochimiques ;
- figure 3: une vue schématique de l'ensemble de cellules électrochimiques avec le rail de fixation fixant les cellules électrochimiques à un bâti de module de batterie ;
- figure 4 : une vue schématique de profil d'un rail de fixation en appui contre une patte de fixation ;
- figure 5 : une vue schématique d'une patte de fixation recouverte par un isolant électrique.

Pour plus de clarté, les éléments identiques ou similaires sont repérés par des signes de référence identiques sur l'ensemble des figures.

### DESCRIPTION DÉTAILLÉE D'UN MODE DE RÉALISATION

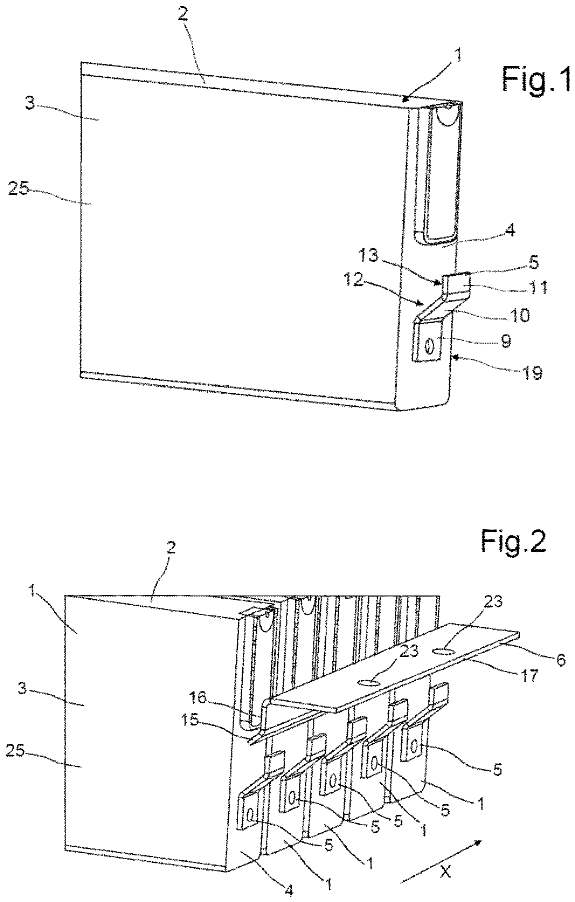

L'invention concerne une cellule électrochimique **1,** tel qu'illustrée sur la figure **1****,** qui peut être utilisée, par exemple, dans un véhicule électrique ou hybride, c'est-à-dire mus au moins partiellement par de l'énergie électrique, par exemple.

Une cellule électrochimique **1** comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Il est connu d'assembler, en série et/ou en parallèle, une pluralité de cellules électrochimiques **1** afin de réaliser des modules de batterie **8.**

Plusieurs modules sont regroupés dans un carter et forment alors un bloc batterie aussi souvent désigné par l'expression anglaise « pack batterie », ce carter contenant généralement une interface de montage et des bornes de raccordement.

La cellule électrochimique **1** comprend un empilement d'électrodes positives reliées les unes aux autres et un empilement d'électrodes négatives reliées les unes aux autres. Les électrodes positives et négatives sont logées dans un boîtier **25** métallique creux, dit « godet » qui est généralement en aluminium. Une fois l'ensemble d'électrodes intégrées dans le boîtier **25,** une paroi supérieure **2,** se présentant sous la forme d'une plaque formant un couvercle, est soudée au boîtier **25** par laser, par exemple, pour réaliser la connexion structurelle et l'étanchéité de la cellule électrochimique **1.**

Le boîtier **25** présente une forme parallélépipédique de section rectangulaire et comprend deux parois longitudinales **3** opposées et deux parois transversales **4** opposées et perpendiculaires aux parois longitudinales 3. Une borne positive et une borne négative sont disposées sur la paroi supérieure **2.**

Les parois transversales **4** présentent une largeur plus petite que les parois longitudinales **3.**

La cellule électrochimique **1** est une cellule électrochimique **1** dite « longue ». La cellule électrochimique **1** présente une longueur supérieure à 100 mm, une hauteur supérieure à 50 mm et une largeur supérieure à 18 mm. La cellule électrochimique **1** peut présenter une longueur de 150 mm, une hauteur de 65 mm et une largeur de 23 mm, par exemple.

La cellule électrochimique **1** comprend au moins une patte de maintien **5** fixée sur l'une des parois transversales **4** ou côté de la cellule électrochimique **1** et qui fait saillie sur la paroi transversale **4.**

De préférence, chaque paroi transversale **4** ou côté de la cellule électrochimique **1** comprend une patte de maintien **5.**

La patte de maintien **5** est fixée à une partie inférieure **19** de la paroi transversale **4** et s'étend vers l'extérieur de la paroi transversale **4** et vers la paroi supérieure **2,** c'est-à-dire vers le haut.

La patte de maintien **5** comprend une première portion **9** plate fixée sur la paroi transversale **4,** une deuxième portion **10** inclinée par rapport à la première portion **9** en s'étendant vers l'extérieur et une troisième portion **11** inclinée par rapport à la deuxième portion **10.** Un espace **12** est formé entre les deuxième et troisième portions **10, 11** de la patte de maintien 5 et la paroi transversale 4 pour pouvoir y insérer un rail de fixation **6.**

Alternativement, la patte de maintien **5** peut comprendre seulement une première portion **9** plate fixée sur la paroi transversale **4** et une deuxième portion **10** inclinée par rapport à la première portion **9.**

De préférence, l'espace **12** est ouvert vers le haut, du côté de la paroi supérieure **2** de la cellule électrochimique **1.**

La première portion **9** est soudée à la paroi transversale **4.**

La première portion **9** et la deuxième portion **10** présentent des longueurs et largeurs similaires. Leur longueur est supérieure à la longueur de la troisième portion **11.** Les première, deuxième et troisième portions **9, 10, 11** de la patte de maintien **5** sont planes et reliées par un arrondi formé par pliage.

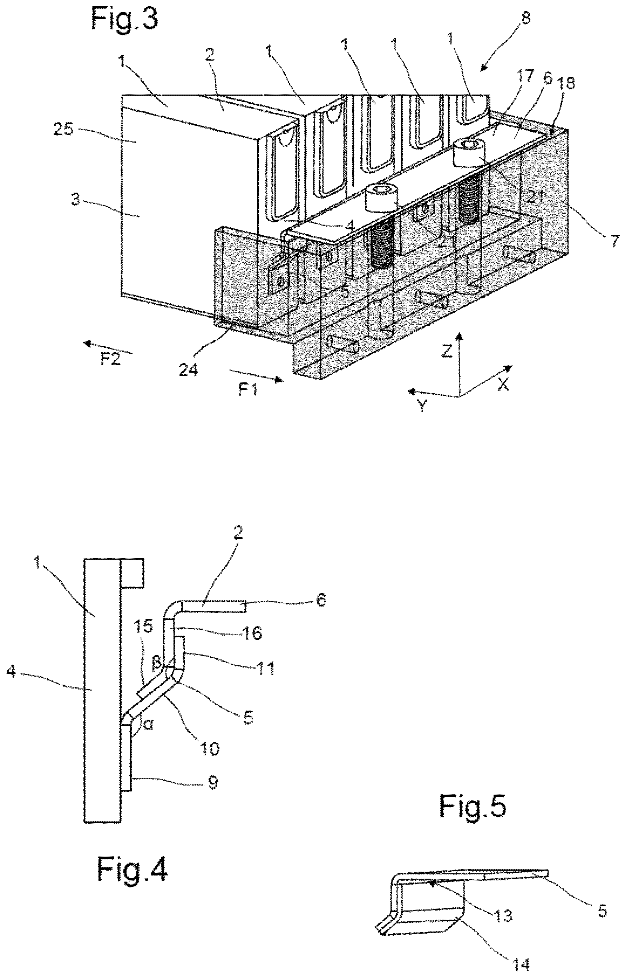

Comme illustré sur la figure **4****,** la deuxième portion **10** est inclinée par rapport à la première portion **9** d'un angle α compris entre 100° et 170°. La troisième portion **11** est inclinée par rapport à la deuxième portion **10** d'un angle β compris entre 100° et 170°. Plus généralement, on choisira un angle β supérieur ou égal à 100°, de préférence supérieur ou égal à 120° et/ou inférieur ou égal à 170°, de préférence inférieur ou égal à 150°.

En variante et comme illustré sur la figure **5****,** les deuxième et troisième portions **10, 11** de la patte de maintien **5** comprennent une surface interne **13** recouverte par un isolant électrique **14** tel un plastique isolant ou une couche d'un matériau isolant, par exemple.

L'invention concerne également un procédé d'assemblage d'un module de batterie **8** comprenant plusieurs cellules électrochimiques **1** telles que définies précédemment.

Le procédé d'assemblage comprend une étape de positionnement de plusieurs cellules électrochimiques **1** dans un boîtier de module de batterie **8.** Les cellules électrochimiques **1** sont positionnées de manière que les pattes de maintien **5** soient alignées les unes par rapport aux autres suivant une direction horizontale **X,** comme illustré sur la figure 2.

La figure 2 montre qu'une seule paroi transversale **4** pour chaque cellule électrochimique **1** mais chaque cellule électrochimique **1** comprend une deuxième paroi transversale comportant une deuxième patte de maintien. Les deuxièmes pattes de maintien sont également alignées les unes par rapport aux autres suivant la direction horizontale **X.** La figure 2 montre seulement cinq cellules électrochimiques **1** à titre d'exemple. Le module de batterie **8** peut comprendre plus ou moins de cinq cellules électrochimiques **1.**

Le procédé d'assemblage comprend ensuite une étape d'insertion d'un premier rail de fixation **6** dans un premier espace **12** prévu entre les premières pattes de maintien **5** et les premières parois transversales **4** des cellules électrochimiques **1** et d'insertion d'un deuxième rail de fixation dans un deuxième espace prévu entre les deuxièmes pattes de maintien et les deuxièmes parois transversales des cellules électrochimiques **1.**

Chaque rail de fixation **6** est fixé sur un bâti **7** respectif du module de batterie **8,** comme illustré sur la figure **3****.** Le rail de fixation **6** vient en appui contre la patte de maintien **5.**

Le premier rail de fixation **6** est fixé sur un premier bâti **7** et le deuxième rail de fixation est fixé sur un deuxième bâti.

Chaque rail de fixation **6** comprend une première partie **15** en appui contre la deuxième portion **10** de la patte de maintien **5,** une deuxième partie **16** inclinée par rapport à la première partie **15** et en appui contre la troisième portion **11** de la patte de maintien **5** et une troisième partie **17** inclinée par rapport à la deuxième partie **16** et fixé à une face supérieure **18** du bâti **7.**

La deuxième partie **16** est inclinée par rapport à la première partie **15** d'un angle identique à l'angle β, compris entre 100° et 170°. Plus généralement, on choisira un angle β supérieur ou égal à 100°, de préférence supérieur ou égal à 120° et/ou inférieur ou égal à 170°, de préférence inférieur ou égal à 150°.

La troisième partie **17** est perpendiculaire à la deuxième partie **16.** La troisième partie **17** comprend deux orifices **23** pour visser deux vis **21** dans le bâti **7.**

Les deux bâtis **7** font parties du boîtier du module de batterie **8.**

Ainsi, une fois que les deux rails de fixation **6** sont fixés aux deux bâtis **7** respectifs, chaque rail de fixation **6** exerce une force contre chaque patte de maintien **5** qui est dirigée vers l'un des bâtis **7** respectifs. Le premier rail de fixation **6** exerce une première force **F1** sur les premières pattes de maintien **5,** dirigée vers le premier bâti **7** suivant une direction transversale **Y,** et le deuxième rail de fixation exerce une deuxième force **F2** sur les deuxièmes pattes de maintien, antagoniste à la première force **F1,** et dirigée vers le deuxième bâti, suivant la direction transversale **Y.**

Les cellules électrochimiques **1** sont tirées de chaque côté par les deux rails de fixation **6.** Autrement dit, les cellules électrochimiques **1** sont plaquées contre les deux rails de fixation **6.**

La patte de maintien **5** est en métal et est déformable élastiquement. Cette élasticité permet de faciliter l'assemblage des rails de fixation **6** en leur laissant un degré de liberté pour leur positionnement entre chaque bâti **7** et la cellule électrochimique **1.** En effet, chaque patte de maintien **5** est déformée et étirée par le rail de fixation **6** vers le bâti **7** lors du montage.

Lorsque la cellule électrochimique **1** est en position assemblée dans le module de batterie **8** et verrouillée par le rail de fixation **6,** la cellule électrochimique **1** est enserrée suivant une direction axiale **Z** entre le rail de fixation **6** et un socle inférieur **24** du module de batterie **8.** Le rail de fixation **6** exerce une force sur la patte de maintien **5** qui est dirigée vers le socle inférieur **24.**

Chaque rail de fixation **6** est inséré en une fois entre les parois transversales **4** et les pattes de maintien **5** correspondantes d'un côté des cellules électrochimiques **1.**

En variante, les rails de fixation **6** sont recouverts, au moins partiellement, par une couche d'isolant électriquement pour isoler les rails de fixation **6** des pattes de maintien **5.**

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Cellule électrochimique (1) comprenant une borne positive, une borne négative, deux parois longitudinales (3) opposées et deux parois transversales (4) opposées et perpendiculaires aux parois longitudinales (3), les parois transversales (4) présentant une largeur plus petite que les parois longitudinales (3), **caractérisée en ce qu'**elle comprend au moins une patte de maintien (5) fixée sur l'une des parois transversales (4) de la cellule électrochimique (1) et faisant saillie depuis la paroi transversale (4), la paroi transversale (4) et la patte de maintien (5) délimitant un espace (12) destiné à recevoir un rail de fixation (6) en appui contre la patte de maintien (5) dans une position d'assemblage et lorsque le rail de fixation (6) est fixé sur un bâti (7) d'un module de batterie (8).

2. Cellule électrochimique (1) selon la revendication 1, **caractérisée en ce que** la patte de maintien (5) est déformable élastiquement.

3. Cellule électrochimique (1) selon l'une quelconque des revendications 1 ou 2, **caractérisée en ce que** la patte de maintien (5) est fixée à une partie inférieure (19) de la paroi transversale (4).

4. Cellule électrochimique (1) selon l'une quelconque des revendications 1 à 3, **caractérisée en ce que** la patte de maintien (5) s'étend depuis la paroi transversale (4) vers l'extérieur de la paroi transversale (4), l'espace (12) étant ouvert vers le haut, du côté d'une paroi supérieure (2) de la cellule électrochimique (1).

5. Cellule électrochimique (1) selon la revendication 4, **caractérisée en ce que** la patte de maintien (5) comprend une première portion (9) fixée à la paroi transversale (4), et une deuxième portion (10) inclinée par rapport à la première portion (9) en s'étendant vers l'extérieur de la paroi transversale (4), la patte de maintien (5) comprenant de préférence une troisième portion (11) inclinée par rapport à la deuxième portion (10).

6. Cellule électrochimique (1) selon l'une quelconque des revendications 1 à 5, **caractérisée en ce que** la patte de maintien (5) est en matériau(x) métallique(s).

7. Cellule électrochimique (1) selon la revendication 6, **caractérisée en ce que** les deuxième et troisième portions (10, 11) de la patte de maintien (5) comprennent une surface interne (13) recouverte au moins en partie, de préférence intégralement, par un isolant électrique (14).

8. Cellule électrochimique (1) selon l'une quelconque des revendications 1 à 7, **caractérisée en ce qu'**elle comprend deux pattes de maintien (5), chacune fixée sur l'une des deux parois transversales (4) distinctes.

9. Module de batterie (8) **caractérisé en ce qu'**il comprend au moins une cellule électrochimique (1) telle que définie selon l'une quelconque des revendications 1 à 8.

10. Module de batterie (8) selon la revendication 9, **caractérisé en ce que** le rail de fixation (6) comprend une première partie (15) en appui contre la deuxième portion (10) de la patte de maintien (5), une deuxième partie (16) inclinée par rapport à la première partie (15) et en appui contre la troisième portion (11) de la patte de maintien (5) et une troisième partie (17) inclinée par rapport à la deuxième partie (16) et fixé à une face supérieure (18) du bâti (7).

11. Module de batterie (8) selon l'une quelconque des revendications 9 ou 10, **caractérisé en ce que** le rail de fixation (6) est recouvert au moins en partie par une couche de matériau isolant électriquement.

12. Module de batterie (8) selon l'une quelconque des revendications 9 à 11, **caractérisé en ce que** lorsque la cellule électrochimique (1) est en position assemblée dans le module de batterie (8) et verrouillée par le rail de fixation (6), la cellule électrochimique (1) est enserrée axialement entre le rail de fixation (6) et un socle inférieur (24) du module de batterie (8).

13. Procédé d'assemblage d'un module de batterie (8) tel que défini selon l'une quelconque des revendications 9 à 12, **caractérisé en ce qu'**il comprend :
- une étape de positionnement de plusieurs cellules électrochimiques (1) dans un boîtier de module de batterie (8), chaque cellule électrochimique (1) comprenant au moins une patte de maintien (5) fixée sur l'une des parois transversales (4) et positionnée de manière que les pattes de maintien (5) de plusieurs cellules électrochimiques (1) soient alignées les unes aux autres,
- une étape d'insertion d'un rail de fixation (6) entre les pattes de maintien (5) et les parois transversales (4) des cellules électrochimiques (1), et
- une étape de fixation du rail de fixation (6) sur un bâti (7) du module de batterie (8), le rail de fixation (6) venant en appui contre la patte de maintien (5).

## Patentansprüche

1. Elektrochemische Zelle (1), umfassend einen positiven Anschluss, einen negativen Anschluss, zwei gegenüberliegende Längswände (3) und zwei gegenüberliegende und senkrecht zu den Längswänden (3) verlaufende Querwände (4), wobei die Querwände (4) eine geringere Breite als die Längswände (3) aufweisen, **dadurch gekennzeichnet, dass** sie mindestens eine Haltelasche (5) umfasst, die an einer der Querwände (4) der elektrochemischen Zelle (1) befestigt ist und von der Querwand (4) vorsteht, wobei die Querwand (4) und die Haltelasche (5) einen Raum (12) begrenzen, der dazu bestimmt ist, eine Befestigungsschiene (6) aufzunehmen, die in einer Montageposition und wenn die Befestigungsschiene (6) an einem Rahmen (7) eines Batteriemoduls (8) befestigt ist, an der Haltelasche (5) anliegt.

2. Elektrochemische Zelle (1) nach Anspruch 1,
**dadurch gekennzeichnet, dass** die Haltelasche (5) elastisch verformbar ist.

3. Elektrochemische Zelle (1) nach einem der Ansprüche 1 oder 2, **dadurch gekennzeichnet, dass** die Haltelasche (5) an einem unteren Teil (19) der Querwand (4) befestigt ist.

4. Elektrochemische Zelle (1) nach einem der Ansprüche 1 bis 3,
**dadurch gekennzeichnet, dass** sich die Haltelasche (5) von der Querwand (4) zur Außenseite der Querwand (4) erstreckt, wobei der Raum (12) nach oben auf der Seite einer oberen Wand (2) der elektrochemischen Zelle (1) offen ist.

5. Elektrochemische Zelle (1) nach Anspruch 4, **dadurch gekennzeichnet, dass** die Haltelasche (5) einen ersten Abschnitt (9), der an der Querwand (4) befestigt ist, und einen zweiten Abschnitt (10) umfasst, der in Bezug auf den ersten Abschnitt (9) geneigt ist und sich von der Querwand (4) nach außen erstreckt, wobei die Haltelasche (5) vorzugsweise einen dritten Abschnitt (11) umfasst, der in Bezug auf den zweiten Abschnitt (10) geneigt ist.

6. Elektrochemische Zelle (1) nach einem der Ansprüche 1 bis 5,
**dadurch gekennzeichnet, dass** die Haltelasche (5) aus metallischem(n) Material(ien) besteht.

7. Elektrochemische Zelle (1) nach Anspruch 6, **dadurch gekennzeichnet, dass** der zweite und dritte Abschnitt (10, 11) der Haltelasche (5) eine Innenfläche (13) umfassen, die mindestens teilweise, vorzugsweise vollständig, von einem elektrischen Isolator (14) bedeckt ist.

8. Elektrochemische Zelle (1) nach einem der Ansprüche 1 bis 7,
**dadurch gekennzeichnet, dass** sie zwei Haltelaschen (5) umfasst, die jeweils an einer der beiden separaten Querwände (4) befestigt sind.

9. Batteriemodul (8), **dadurch gekennzeichnet, dass** es mindestens eine elektrochemische Zelle (1) umfasst, wie in einem der Ansprüche 1 bis 8 definiert.

10. Batteriemodul (8) nach Anspruch 9, **dadurch gekennzeichnet, dass** die Befestigungsschiene (6) einen ersten Teil (15), der an dem zweiten Abschnitt (10) der Haltelasche (5) anliegt, einen zweiten Teil (16), der in Bezug auf den ersten Abschnitt (15) geneigt ist und an dem dritten Abschnitt (11) der Haltelasche (5) anliegt, und einen dritten Teil (17), der in Bezug auf den zweiten Abschnitt (16) geneigt ist und an einer Oberseite (18) des Rahmens (7) befestigt ist, umfasst.

11. Batteriemodul (8) nach einem der Ansprüche 9 oder 10,
**dadurch gekennzeichnet, dass** die Befestigungsschiene (6) mindestens teilweise mit einer Schicht aus elektrisch isolierendem Material bedeckt ist.

12. Batteriemodul (8) nach einem der Ansprüche 9 bis 11,
**dadurch gekennzeichnet, dass**, wenn die elektrochemische Zelle (1) sich in der montierten Position im Batteriemodul (8) befindet und durch die Befestigungsschiene (6) verriegelt ist, die elektrochemische Zelle (1) axial zwischen der Befestigungsschiene (6) und einem unteren Sockel (24) des Batteriemoduls (8) eingespannt ist.

13. Verfahren zum Montieren eines Batteriemoduls (8) nach einem der Ansprüche 9 bis 12, **dadurch gekennzeichnet, dass** es umfasst:
- Schritt zum Positionieren mehrerer elektrochemischer Zellen (1) in einem Batteriemodulgehäuse (8), wobei jede elektrochemische Zelle (1) mindestens eine Haltelasche (5) umfasst, die an einer der Querwände (4) befestigt und so positioniert ist, dass die Haltelaschen (5) mehrerer elektrochemischer Zellen (1) zueinander ausgerichtet sind,
- Schritt zum Einsetzen einer Befestigungsschiene (6) zwischen die Haltelaschen (5) und die Querwände (4) der elektrochemischen Zellen (1), und
- Schritt zum Befestigen der Befestigungsschiene (6) an einem Rahmen (7) des Batteriemoduls (8), wobei die Befestigungsschiene (6) an der Haltelasche (5) zur Anlage kommt.

## Claims

1. Electrochemical cell (1) comprising a positive terminal, a negative terminal, two opposed longitudinal walls (3), and two opposed transverse walls (4) perpendicular to the longitudinal walls (3), the transverse walls (4) having a width smaller than the longitudinal walls (3), **characterized in that** said electrochemical cell comprises at least one supporting tab (5) attached onto one of the transverse walls (4) of the electrochemical cell (1) and projecting from the transverse wall (4), the transverse wall (4) and the supporting tab (5) delimiting a space (12) intended to receive an attachment rail (6) bearing against the supporting tab (5) in an assembly position and when the attachment rail (6) is attached onto a frame (7) of a battery module (8).

2. Electrochemical cell (1) according to claim 1, **characterized in that** the supporting tab (5) is elastically deformable.

3. Electrochemical cell (1) according to either of claims 1 or 2, **characterized in that** the supporting tab (5) is attached to a lower part (19) of the transverse wall (4).

4. Electrochemical cell (1) according to any of claims 1 to 3, **characterized in that** the supporting tab (5) extends from the transverse wall (4), outward from the transverse wall (4), the space (12) being open at the top, toward an upper wall (2) of the electrochemical cell (1).

5. Electrochemical cell (1) according to claim 4, **characterized in that** the supporting tab (5) comprises a first portion (9) attached to the transverse wall (4), and a second portion (10) angled with respect to the first portion (9) by extending outward from the transverse wall (4), the supporting tab (5) preferably comprising a third portion (11) angled with respect to the second portion (10).

6. Electrochemical cell (1) according to any of claims 1 to 5,
**characterized in that** the supporting tab (5) is made of metal material(s).

7. Electrochemical cell (1) according to claim 6, **characterized in that** the second and the third portion (10, 11) of the supporting tab (5) comprise an inner surface (13) covered at least partially, preferably entirely, by electric insulation (14).

8. Electrochemical cell (1) according to any of claims 1 to 7,
**characterized in that** it comprises two supporting tabs (5), each attached onto one of the two separate transverse walls (4).

9. Battery module (8), **characterized in that** it comprises at least one electrochemical cell (1) as defined according to any of claims 1 to 8.

10. Battery module (8) according to claim 9, **characterized in that** the attachment rail (6) comprises a first part (15) bearing against the second portion (10) of the supporting tab (5), a second part (16) angled with respect to the first part (15) and bearing against the third portion (11) of the supporting tab (5), and a third part (17) angled with respect to the second part (16) and attached to an upper face (18) of the frame (7).

11. Battery module (8) according to either of claims 9 or 10,
**characterized in that** the attachment rail (6) is covered at least partially by a layer of electrically insulating material.

12. Battery module (8) according to any of claims 9 to 11,
**characterized in that** when the electrochemical cell (1) is in an assembled position within the battery module (8) and locked by the attachment rail (6), the electrochemical cell (1) is enclosed axially between the attachment rail (6) and a lower base (24) of the battery module (8).

13. Method for assembling a battery module (8) as defined according to any of claims 9 to 12, **characterized in that** the method comprises:
- a step of positioning a plurality of electrochemical cells (1) within a housing for a battery module (8), each electrochemical cell (1) comprising at least one supporting tab (5) attached onto one of the transverse walls (4) and positioned such that the supporting tabs (5) of a plurality of electrochemical cells (1) are aligned with respect to one another,
- a step of inserting an attachment rail (6) between the supporting tabs (5) and the transverse walls (4) of the electrochemical cells (1), and
- a step of attaching the attachment rail (6) onto a frame (7) of the battery module (8), the attachment rail (6) bearing against the supporting tab (5).
